Europäisches Patentamt

European Patent Office

Office européen des brevets

(11) Numéro de publication: **0 237 449 B1**

(12) **FASCICULE DE BREVET EUROPEEN**

(45) Date de publication de fascicule du brevet: **04.03.92**  (51) Int. Cl.5: **F15B 13/042**, F15B 1/02

(21) Numéro de dépôt: **87420060.3**

(22) Date de dépôt: **02.03.87**

(54) **Dispositif d'alimentation en fluide d'une installation hydraulique, pneumatique ou hydropneumatique.**

(30) Priorité: **13.03.86 FR 8604120**

(43) Date de publication de la demande:
**16.09.87 Bulletin 87/38**

(45) Mention de la délivrance du brevet:
**04.03.92 Bulletin 92/10**

(84) Etats contractants désignés:
**AT BE CH DE ES GB GR IT LI LU NL SE**

(56) Documents cités:
EP-A- 0 027 437     DE-B- 1 021 221
FR-A- 1 170 995     FR-A- 1 562 062
FR-A- 2 286 943     GB-A- 2 095 001
US-A- 4 016 895     US-A- 4 561 464

Festo-Lehrbuch "Einführung in die Pneumatik" Meixner/Kobler, 1975, Seiten 110, 112, 117, 118

(73) Titulaire: **SOCIETE D'EXPLOITATION DE BREVETS POUR L'INDUSTRIE ET LA MARINE (SEBIM)**
**Z.I. La Palunette**
**F-13220 Chateauneuf les Martigues(FR)**

(72) Inventeur: **Gemignani, André**
**Ouartier Les Colles**
**F-13920 Saint Mitre Les Remparts(FR)**
Inventeur: **Juge Boulogne, Serge**
**25 rue Pasteur**
**F-13340 Rognac(FR)**
Inventeur: **Schaumburg, Gérald**
**80 avenue du Dr Fleming**
**F-13500 Martigues(FR)**

(74) Mandataire: **Maureau, Philippe et al**
**Cabinet Germain & Maureau Le Britannia - Tour C 20, bld Eugène Déruelle**
**F-69003 Lyon(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

Rank Xerox (UK) Business Services

## Description

La présente invention a pour objet un dispositif d'alimentation en fluide d'une installation hydraulique, pneumatique ou hydro-pneumatique.

L'invention se propose d'apporter une solution simple et fiable aux dispositifs de commande d'appareils hydrauliques, pneumatiques ou hydro-pneumatiques nécessitant un changement d'état rapide, tel que mise sous pression ou hors pression d'une enceinte ou commande des chambres d'un vérin.

Un tel dispositif peut servir par exemple à l'alimentation d'une soupape montée sur une capacité à protéger.

Il existe des dispositifs de commande qui réalisent la fonction d'alimentation d'une manière plus ou moins rapide, mais dont l'état est indécis lorsque l'on avoisine le point critique de basculement.

Il s'agit notamment des distributeurs à tiroirs qui présentent l'inconvénient de pouvoir se stabiliser dans une ou plusieurs positions intermédiaires plaçant le dispositif en défaut. En outre, dans ces systèmes, la partie distributeur est généralement distincte de l'élément de commande proprement dit, avec réalisation d'une liaison hydraulique, pneumatique ou hydro-pneumatique qui aggrave la sûreté du changement de position du distributeur. Enfin, ces systèmes mettent le plus souvent en jeu des éléments mobiles et des joints pour lesquels la fréquence de basculement est un critère d'usure très important.

Le document Festo-manuel "Einführung in die Pneumatic" Meixner/ Kobler décrit des 3/2-distributeurs comportant deux étages comportant chacun un tiroir de distribution, les deux tiroirs étant coaxiaux et déplaçables en partie indépendamment et en partie simultanément. Ce dispositif comporte les caractéristiques de la partie générique de la revendication principale. Toutefois, il est réservé à de petites installations pneumatiques et n'évite pas d'éventuels phénomènes de battement compte tenu notamment de la présence d'un ressort entre les deux tiroirs. En outre, ce dispositif met en jeu des joints d'étanchéité qui perturbent le passage rapide d'un état à l'autre, et nécessite une pression de commande importante.

Le but de l'invention est de fournir un dispositif d'alimentation d'appareils hydrauliques, pneumatiques ou hydro-pneumatiques garantissant un passage brusque et complet d'un état à l'autre, sans possibilité de mise en équilibre intermédiaire, ne nécessitant pour sa manoeuvre qu'un organe de commande à faible course, ne nécessitant pas une pression ou un débit d'actionnement élevés, et pouvant travailler avec des fluides mono ou multiphases dans une large plage de pression comprise entre 3 et 20 bars.

A cet effet, ce dispositif est défini par la structure faisant l'objet de la partie caractérisante de la revendication 1.

Lorsque la seconde partie du tiroir est soumise à une pression de fluide, elle soulève la première partie du tiroir de son siège annulaire et établit une première communication entre deux orifices. Lorsque la seconde partie du tiroir n'est plus soumise à une pression de fluide, le ressort agissant sur la seconde partie déplace l'ensemble en sens inverse, jusqu'à ce que la seconde partie du tiroir soit en appui sur le siège annulaire, position dans laquelle les trois orifices sont tous séparés les uns des autres. La poursuite du mouvement de la seconde partie du tiroir et sa désolidarisation de la première partie assure la mise en communication de deux autres orifices. Lorsqu'une pression de fluide est réexercée sur la seconde partie du tiroir, le mouvement inverse est réalisé, avec isolement des trois orifices lorsque la seconde partie du tiroir revient en contact avec la première.

Conformément à une première forme d'exécution de ce dispositif, l'orifice, relié à la source de fluide sous pression, débouche dans la zone de la chambre contenant la première partie du tiroir, tandis que les deux autres orifices débouchent dans deux espaces annulaires ménagés dans la zone de la chambre contenant la seconde partie du tiroir, l'orifice relié à l'installation étant plus près du siège annulaire que l'orifice relié à la vidange, et la seconde partie du tiroir, coulissant avec étanchéité dans la partie de la chambre comprise entre les deux orifices reliés, respectivement, à l'installation et à la vidange, est constituée par un élément tubulaire ouvert du côté de la première partie du tiroir, communiquant par un orifice avec l'espace annulaire relié à la vidange, et fermé à son extrémité opposée à celle tournée vers la première partie du tiroir, l'extrémité fermée de la seconde partie du tiroir délimitant une paroi d'une chambre pouvant être successivement alimentée en fluide de commande et reliée à la vidange.

Lorsque la chambre, située sous la deuxième partie du tiroir, est alimentée en fluide sous pression, la deuxième partie du tiroir soulève la première partie de son siège annulaire, assurant la mise en communication de la source de fluide sous pression avec l'installation à commander. Lorsque cette chambre est mise à la vidange, le ressort, associé à la première partie du tiroir, provoque le déplacement des deux parties du tiroir jusqu'à ce que la première partie du tiroir prenne appui sur le siège annulaire. Les trois orifices reliés, respectivement, à la source de fluide sous pression, à l'installation et à la vidange sont alors séparés les uns des autres. Lors de la poursuite du mouvement de la seconde partie du tiroir sous l'action de la pression régnant dans l'espace annulaire relié à l'installation, celui-ci est mis en communication avec la vidange par l'intermédiaire de l'intérieur de la deuxième partie du tiroir. Le mouvement inverse est obtenu lorsque la chambre, située sous la deuxième partie du tiroir, est à nouveau alimentée en fluide sous pression.

Conformément à une autre forme d'exécution de ce dispositif, l'orifice, relié à la source de fluide sous pression, débouche axialement dans la zone de la chambre contenant la première partie du tiroir qui est constituée par un élément tubulaire, l'orifice relié à la vidange débouche dans un espace annulaire ménagé dans la zone de la chambre contenant la première partie du tiroir, et l'orifice relié à l'installation débouche dans un espace annulaire ménagé dans la zone de la chambre contenant la seconde partie du tiroir, l'extrémité de la seconde partie du tiroir située du côté opposé à la première partie du tiroir délimitant, pour partie, une chambre pouvant être successivement alimentée en fluide de commande et reliée à la vidange.

Lorsque cette chambre est reliée à la vidange, la deuxième partie du tiroir est décollée de la première partie de celui-ci, et cette dernière est en appui contre le siège annulaire. Les orifices reliés respectivement à la source de fluide sous pression et à l'installation sont en communication. Lorsque cette chambre est alimentée en fluide sous pression, la deuxième partie du tiroir est déplacée en direction de la première.

Dans un premier temps, la deuxième partie du tiroir prend appui contre la première, coupant la communication entre l'alimentation en fluide sous pression et l'installation puis, dans un second temps, la deuxième partie du tiroir soulève la première et assure la mise en communication des orifices reliés à l'installation et à la vidange.

Selon une autre caractéristique de l'invention, les moyens d'alimentation en fluide sous pression de la chambre située à l'extrémité libre de la seconde partie du tiroir comprennent deux chambres coaxiales de sections différentes, dont la première, reliée en permanence à une source de fluide sous pression, contient une bille de diamètre inférieur au diamètre de la seconde chambre, à laquelle est associé un ressort tendant à la déplacer dans un sens d'isolement des deux chambres, la seconde chambre étant reliée à la chambre située à l'extrémité libre de la deuxième partie du tiroir, et étant traversée avec étanchéité par une tige creuse, reliée à la vidange, et pouvant prendre appui sur la bille pour la dégager de son siège.

Lorsque la tige appuie sur la bille et la décolle de son siège, la chambre, située sous la deuxième partie du tiroir est alimentée en fluide sous pression. Lorsque la tige est relâchée, la bille isole la seconde chambre, qui est alors reliée à la vidange par l'intermédiaire du canal ménagé dans la tige.

Avantageusement, les moyens d'actionnement de la tige sont constitués par un piston qui, traversé par un axe qui en est solidaire, coaxial à la tige et prenant appui sur celle-ci, est monté coulissant sans frottement dans une chambre, et délimite, par sa face située du côté de la tige, une chambre reliée à une source de fluide sous pression, avec interposition d'une membrane souple entre le piston et la chambre, le piston étant soumis mécaniquement à une pression d'une valeur déterminée, antagoniste à la pression exercée par le fluide contenu dans la chambre.

Cette membrane, qui travaille au cisaillement lors du déplacement du piston, permet de travailler à de hautes pressions, avec phénomène d'hystérésis négligeable, c'est-à-dire avec un décalage minime entre les pressions de déclenchement du mouvement du piston dans un sens et dans l'autre.

Selon une autre caractéristique intéressante, les moyens de création d'une pression antagoniste à celle exercée sur le piston par le fluide sous pression, sont constitués par une rondelle ressort plate, bridée à sa périphérie à l'intérieur de la tête de commande, et comportant une ouverture centrale pour le passage de l'axe, des moyens solidaires de l'axe étant prévus pour exercer sur la rondelle ressort une précontrainte en la déformant du côté opposé à celui duquel se trouve le piston.

Cette solution est intéressante, puisqu'une rondelle est beaucoup plus compacte qu'un ressort, et beaucoup plus facile à réaliser, avec moins d'aléas de fabrication.

De toute façon, l'invention sera bien comprise à l'aide de la description qui suit, en référence au dessin schématique annexé, représentant, à titre d'exemples non limitatifs, deux formes d'exécution de ce dispositif :

Figure 1 est une vue en coupe longitudinale d'un dispositif comportant les fonctions de détection de la pression dans une capacité à protéger, de production des ordres d'ouverture et de fermeture, et de pilotage d'une soupape placée sur la capacité à protéger ;

Figures 2 à 6 sont cinq vues en coupe longitudinale d'un dispositif de pilotage de la soupape dans cinq positions ;

Figure 7 représente deux demi-coupes longitudinales d'un autre dispositif de pilotage dans deux positions, respectivement, d'ouverture et de fermeture de la soupape ;

Figure 8 est une vue en coupe longitudinale du dispositif de détection de la pression à l'intérieur de la capacité à protéger et de comparaison avec une pression de référence.

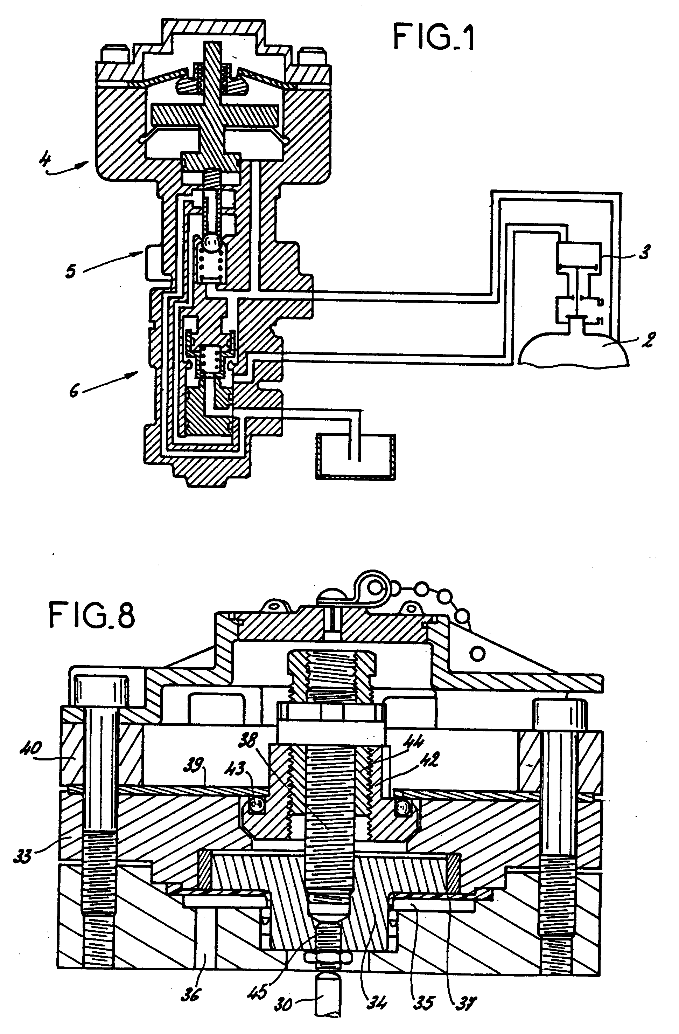

Le dispositif, représenté à la figure 1, comprend une capacité **2** équipée d'une soupape **3**. La pression à l'intérieur de la capacité **2** est maintenue à une valeur prédéterminée par ouverture de la soupape **3** lorsque cela est nécessaire, à l'aide d'un dispositif **4** de détection de la pression à l'intérieur de la capacité et de comparaison avec une pression de référence, agissant sur un dispositif **5** de production des ordres d'ouverture et de fermeture de la soupape qui commandent cette dernière par l'intermédiaire d'un dispositif de pilotage **6.**

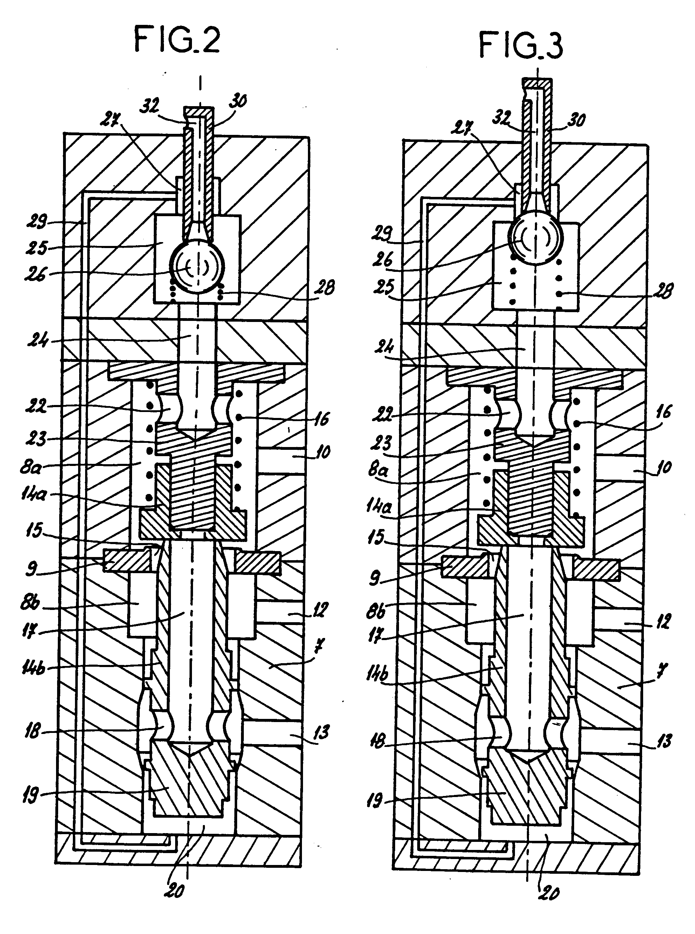

Dans la forme d'exécution représentée aux figures 2 à 6, le dispositif de pilotage comprend un corps **7** à l'intérieur duquel est ménagée une chambre subdivisée en deux parties **8a** et **8b** par l'intermédiaire d'un élément annulaire **9** faisant saillie vers l'intérieur de la chambre.

Dans la partie **8a** de la chambre, débouche un orifice **10** en communication avec la capacité **2,** tandis qu'à l'intérieur de la chambre **8b,** débouchent deux orifices **12** et **13** dont celui **12,** situé plus près de l'élément annulaire **9,** est relié à la tête de la soupape **3.** Le tiroir, monté à l'intérieur de la chambre **8a, 8b,** est constitué par deux parties coaxiales distinctes, à savoir une partie **14a** montée à l'intérieur de la chambre **8a** et une partie **14b** montée à l'intérieur de la chambre **8b.**

La partie **14a** du tiroir possède une section supérieure à la section de l'ouverture **15** de l'élément annulaire **9,** tandis que la partie **14b** du tiroir, susceptible de venir en appui contre la partie **14a** possède une section inférieure a celle de l'ouverture **15** de l'élément annulaire, de façon à pouvoir traverser librement cette dernière.

Comme montré au dessin, la partie **14a** du tiroir est soumise à l'action d'un ressort **16** tendant à la déplacer en direction de l'élément annulaire **9** qui forme siège. La partie **14b** du tiroir coulisse avec étanchéité dans un alésage que comporte la chambre **8b** entre les espaces annulaires dans lesquels débouchent, respectivement, l'orifice **12** relié à la soupape et l'orifice **13** relié au circuit de vidange.

Comme cela ressort du dessin, la partie **14b** du tiroir est tubulaire, c'est-à-dire présente une cavité centrale **17** débouchant, d'une part, à l'extrémité située du côté de la partie **14a** du tiroir et, d'autre part, radialement par des orifices **18,** dans la cavité annulaire en communication avec l'orifice **13.** L'extrémité **19** de la partie **14b** du tiroir, opposée à celle située du côté de la partie **14a,** forme la parmi mobile d'une chambre **20** ménagée dans le corps 7.

En outre, la chambre **8a** communique par l'intermédiaire d'orifices **22** ménagés dans le support de guidage **23** de la partie **14a** du tiroir, et par l'intermédiaire d'une ouverture **24,** avec une chambre **25** contenant une bille **26.**

Coaxialement à cette chambre **25,** et en communication avec elle, est disposée une chambre **27** de diamètre inférieur au diamètre de la bille **26,** de telle sorte que cette dernière puisse, sous l'action d'un ressort **28,** venir obturer le passage entre les chambres **25** et **27.**

La chambre **27** communique en permanence avec la chambre **20** par l'intermédiaire d'un canal **29.** En outre, la chambre **27** est traversée avec étanchéité par une tige creuse **30** à l'intérieur de laquelle est ménagé un canal **32** relié au circuit de vidange. Cette aiguille est susceptible d'exercer une pression sur la bille **26** pour la décoller de son siège et assurer la mise en communication des chambres **25** et **27.**

Lorsque le dispositif de pilotage se trouve dans la position représentée à la figure 2, dans laquelle une pression est exercée par la tige **30** sur la bille **26,** la chambre **25** est en communication avec la chambre **27** et la chambre **20,** de telle sorte que cette dernière est alimentée en fluide sous pression.

La pression de fluide dans la chambre **20** déplace la partie **14b** du tiroir qui soulève la partie **14a** de celui-ci de son siège annulaire **9.**

Comme cela ressort de la figure 2, les orifices **10** et **12** sont en communication et la tête de la soupape est alimentée en fluide sous pression, de telle sorte que la soupape est fermée.

Lorsque la valeur de la pression à l'intérieur de la capacité **2** à protéger dépasse une valeur prédéterminée, la tige **30** est retirée, et la bille **26** isole la chambre **25** de la chambre **27.** De ce fait, la chambre **20** se trouve elle-même isolée de la source de fluide sous pression, comme montré à la figure 3.

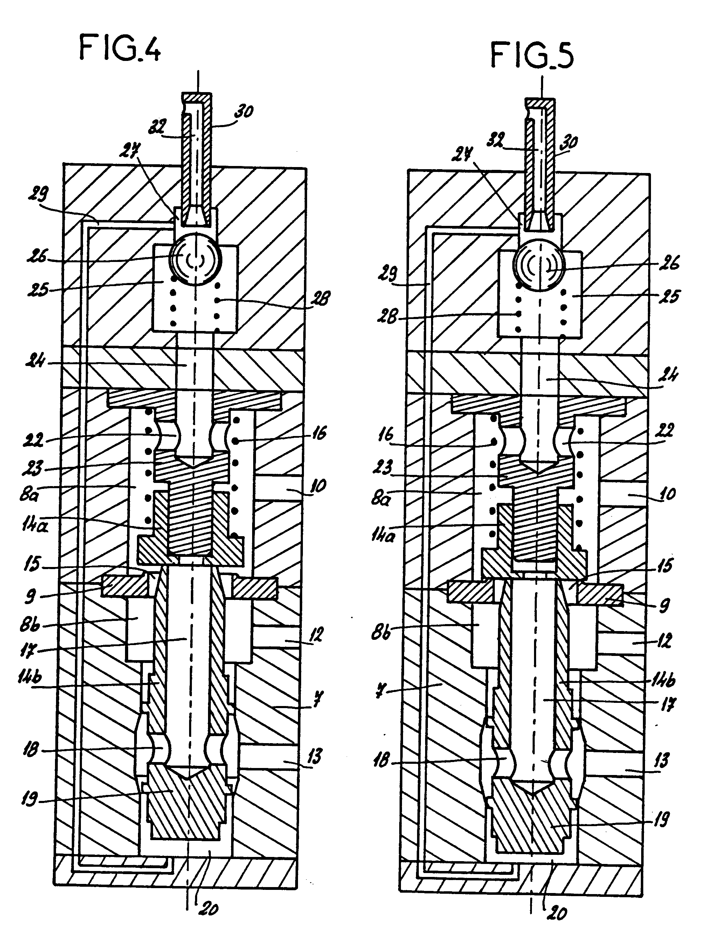

Lors de la poursuite du mouvement de la tige, celle-ci décolle de la bille, ce qui assure la mise en communication de la chambre 20 avec le circuit de vidange, comme montré à la figure 4.

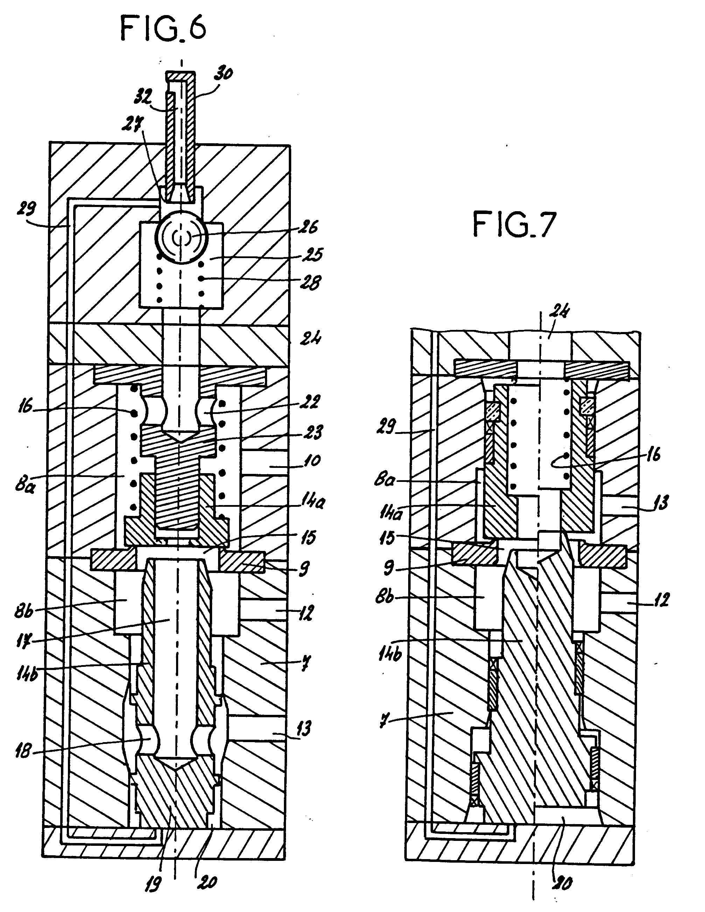

Il en résulte, sous l'action de détente du ressort **16,** un déplacement de l'équipage mobile constitué par les parties **14a** et **14b** du tiroir jusqu'à ce que la partie **14a** vienne en appui contre le siège annulaire **9.** Dans cette position, représentée à la figure 5, la partie **14b** du tiroir est encore en contact avec celle **14a,** de telle sorte que les trois orifices **10, 12** et **13** sont totalement isolés les uns des autres.

Sous l'action de la pression régnant dans la chambre annulaire dans laquelle débouche l'orifice **12,** la partie **14b** du tiroir poursuit son mouvement, et se décolle de la partie **14a,** assurant, comme montré à la figure 6, la mise en communication des orifices **12** et **13** et, par suite, la liaison de la tête de la soupape avec le circuit de vidange. La soupape s'ouvre alors jusqu'à ce que la pression dans la capacité **2** redevienne acceptable. Lorsque la pression est acceptable, après déplacement de la tige **30,** la chambre **20** est de nouveau alimentée en fluide sous pression, et le dispositif de pilotage change d'état selon une séquence inverse de celle représentée aux figures 2 à 6.

La figure 7 représente une variante du dispositif des figures 2 à 6 dans laquelle les mêmes éléments sont désignés par les mêmes références que précédemment.

Dans ce cas, l'orifice **12,** relié à la tête de soupape, débouche toujours dans la chambre **8b,** mais l'orifice **13** relié au circuit de vidange, débouche dans la chambre **8a.** En outre, la partie **14a** du tiroir est tubulaire et l'alimentation en fluide sous pression est réalisée par l'intérieur de celle-ci. Dans ce cas, l'élément **14b** n'est plus tubulaire.

Dans cette forme d'exécution, la tête de la soupape est alimentée, comme montré à la partie gauche de la figure 7, lorsque la chambre **20** est reliée au circuit de vidange, tandis que la tête de soupape est reliée au circuit de vidange lorsque la chambre **20** est alimentée en fluide sous pression, comme montré à la partie droite de la figure 7.

La figure 8 représente plus en détail la partie du dispositif de figure 1 détectant la pression dans la capacité à protéger, comparant cette pression avec une pression de référence, et agissant sur la tige de commande de la bille **26.**

Ce dispositif comprend un corps **33** à l'intérieur duquel est monté, coulissant sans frottement, un piston **34** de section en T. Ce piston délimite avec le corps une chambre **35** alimentée par un canal **36** en fluide de la pression à la capacité 2.

Il est à noter que l'étanchéité de la chambre **35** vis-à-vis du piston **34** est réalisée par l'intermédiaire d'une membrane **37** comportant un bourrelet périphérique ancré dans une cavité du corps.

Ce piston est solidaire d'un axe **38** le traversant, servant, d'une part, à l'appui sur la tige **30** et, d'autre part, au montage de moyens suceptibles de réaliser une pression antagoniste à celle exercée sur le piston **34** par le fluide contenu dans la chambre **35,** et d'un moyen **45,** réglable, destiné à l'appui sur la tige **30.** Cette pression antagoniste est obtenue par une rondelle ressort **39** dont la périphérie est bridée en plusieurs points **40** sur le corps, et qui est traversée par une pièce tubulaire **42** qui prend appui sur sa face inférieure avec interposition de billes **43.**

Cet élément tubulaire **42** comporte un taraudage permettant son vissage sur une douille **44** elle-même filetée et taraudée pour pouvoir être vissée sur l'axe **38.**

Il va de soi que plus la pièce **42** sera déplacée sur l'axe vers le haut, plus la tension élastique qui sera fournie par la rondelle **39** sera importante. Le fait de disposer de deux éléments vissés **42, 44,** permet de réaliser un réglage fin de la tension de la rondelle ressort.

En pratique, le tarage de la rondelle est réalisé pour que le dispositif se trouve dans l'état représenté à la figure 8, lorsque la pression à l'intérieur de la capacité **2** est inférieure à une pression prédéterminée. Lorsque cette valeur de pression est dépassée, la pression régnant à l'intérieur de la chambre **35** assure le déplacement du piston **34** vers le haut, mouvement rendu possible par la déformation de la membrane, ce qui se traduit par un déplacement correspondant de la tige **30** qui actionne la bille **26** du dispositif de production des ordres d'ouverture et de fermeture de la soupape.

Lorsque la valeur de la pression dans la capacité repasse au-dessous du seuil prédéterminé, le piston revient à sa position d'origine, et commande la fermeture de la soupape.

Ce dispositif de détection est intéressant en ce sens qu'il est très compact et très fiable, puisqu'une rondelle ressort est de dimensions moins importantes qu'un ressort traditionnel de mêmes caractéristiques, et fonctionne avec une excellente réversibilité, sans hystéréris, puisque la membrane évite les frottements que l'on rencontre dans les dispositifs mettant en oeuvre un piston dont l'étanchéité vis-à-vis de la paroi d'une chambre est réalisée à l'aide de joints.

Comme il ressort de ce qui précède, l'invention apporte une grande amélioration à la technique existante en fournissant un dispositif d'alimentation en fluide d'une installation dans lequel le passage d'un état à l'autre se fait très rapidement sans risque de stabilisation du tiroir dans une position intermédiaire stable, puisque les trois orifices reliés, respectivement, à la source de fluide sous pression, à l'installation et au circuit de vidange, ne sont jamais simultanément en communication les uns avec les autres.

**Revendications**

1. Dispositif d'alimentation en fluide d'une installation (3) hydraulique, pneumatique ou hydropneumatique, du type comprenant :

   (a) un corps (7) à l'intérieur duquel est ménagée une chambre (8a, 8b) dans laquelle débouchent un orifice (10) d'amenée de fluide sous pression, un orifice (12) de départ vers l'installation (3) à alimenter et un orifice (13) de vidange, ladite chambre étant subdivisée en deux parties (8a et 8b) par un siège annulaire (9) entourant un passage (15) qui relie les deux parties (8a, 8b) de la chambre entre elles ; et

   (b) un tiroir en deux parties (14a, 14b) coaxiales susceptibles suivant sa position de mettre en communication soit l'orifice (10) d'amenée de fluide sous pression avec l'orifice (12) de départ, soit l'orifice (12) de départ avec l'orifice (13) de vidange, les trois orifices (10, 12, 13) n'étant jamais tous ensemble en communication, les deux parties (14a, 14b) du tiroir étant décalées axialement pour pouvoir prendre appui l'une contre l'autre, la première partie (14a) du tiroir étant logée dans une première partie (8a) de la chambre, possède une zone de section supérieure à celle du passage (15) entouré par le siège annulaire (9) et est soumise à l'action d'un ressort (16) qui tend à la déplacer contre le siège annulaire (9) ; et la seconde partie (14b) du tiroir, étant logée dans la seconde partie (8b) de la chambre, possède une section inférieure à celle du passage (15) qu'elle peut traverser librement, l'extrémité (19) de la seconde partie (14b) du tiroir opposée à celle destinée à venir en appui contre la première partie (14a) du tiroir étant coulissante avec étanchéité dans la seconde partie (8b) de la chambre délimitant une chambre de commande (20) reliée à une vanne de pilotage (26, 28, 30), la pression dans ladite chambre de commande (20) tendant à déplacer la seconde partie (14b) du tiroir contre la première partie (14a) de celui-ci et tendant à déplacer les deux parties (14a, 14b) du tiroir simultanément à l'encontre de l'action du ressort (16) ; deux desdits orifices (10, 12) débouchant respectivement dans chacune des deux parties (8a, 8b) de la chambre, et étant situés de chaque côté du siège annulaire (9), le troisième orifice (13) étant relié avec une cavité centrale (17) ménagée dans l'une (14b) desdites parties du tiroir et débouchant à l'extrémité destinée à venir en appui contre l'autre (14a) des parties du tiroir, caractérisé en ce qu'il comprend un élément annulaire (9) formant le siège, disposé sensiblement à milongueur de la chambre (8a, 8b) et faisant saillie vers l'intérieur de celle-ci, en ce que la chambre de commande (20) est reliée en permanence a une chambre (27) susceptible d'être mise en communication par ladite vanne de pilotage (26, 28, 30), soit avec l'orifice (10) d'amenée de fluide sous pression, soit avec un canal (32) de vidange, en ce que l'orifice (12) de départ débouche dans l'espace annulaire cernant la seconde partie (14b) du tiroir et situé près de l'élément annulaire (9) formant le siège, et en ce que la seconde partie (14b) du tiroir est soumise à l'action de la pression régnant dans ledit espace annulaire qui tend à la découler de la première partie (14a) du tiroir.

2. Dispositif selon la revendication 1, caractérisé en ce que l'orifice (10), relié à la source de fluide sous pression, débouche dans la zone (8a) de la chambre contenant la première partie du tiroir, tandis que les deux autres orifices (12, 13) débouchent dans deux espaces annulaires ménagés dans la zone de la chambre contenant la seconde partie (14b) du tiroir, l'orifice (12) relié à l'installation étant plus près du siège annulaire (9) que l'orifice relié à la vidange, et la seconde partie (14b) du tiroir, coulissant avec étanchéité dans la partie de la chambre comprise entre les deux orifices (12, 13) reliés, respectivement, à l'installation et à la vidange, est constitué par un élément tubulaire ouvert du côté de la première partie du tiroir, communiquant par un orifice (18) avec l'espace annulaire relié à la vidange, et ferme a son extrémité (19) opposée à celle tournée vers la première partie (14a) du tiroir, l'extrémité fermée (19) de la seconde partie du tiroir délimitant une paroi d'une chambre (20) pouvant être successivement alimentée en fluide de commande et reliée à la vidange.

3. Dispositif selon la revendication 1, caractérisé en ce que l'orifice (10), relié à la source de fluide sous pression, débouche axialement dans la zone (8a) de la chambre contenant la première partie (14a) du tiroir qui est constituée par un élément tubulaire, l'orifice (13), relié à la vidange débouche dans un espace annulaire ménagé dans la zone de la chambre (8a) contenant la première partie (14a) du tiroir, et l'orifice (12) relié à l'installation débouche dans un espace annulaire ménagé dans la zone (8b) de la chambre contenant la seconde partie (14b) du tiroir, l'extrémité de la seconde partie du tiroir située du côté opposé à la première partie du tiroir délimitant, pour partie, une chambre (20) pouvant être successivement alimentée en fluide de commande et reliée à la vidange.

4. Dispositif selon l'une quelconque des revendications 1 à 3, caractérisé en ce que les moyens d'alimentation en fluide sous pression de la chambre (20) située à l'extrémité libre de la seconde partie (14b) du tiroir, comprennent deux chambres (25, 27) coaxiales de sections différentes, dont la première (25), reliée en permanence à une source de fluide sous pression, contient une bille (26) de diamètre inférieur au diamètre de la seconde chambre (27), à laquelle est associé un ressort (28) tendant à la déplacer dans un sens d'isolement des deux chambres, la seconde chambre (27) étant reliée à la chambre (20) située à l'extrémité libre de la deuxième partie (14b) du tiroir, et étant traversée avec étanchéité par une tige creuse (30), reliée à la vidange, et pouvant prendre appui sur la bille (26) pour la dégager de son siège.

5. Dispositif selon la revendication 4, caractérisé en ce que les moyens d'actionnement de la tige (30) sont constitués par un piston (34) qui, traversé par un axe (38) qui en est solidaire, coaxial à la tige (30) et prenant appui sur celle-ci, est monté coulissant sans frottement dans une chambre, et délimite, par sa face située du côté de la tige, une chambre (35) reliée à une source de fluide sous pression, avec interposition d'une membrane souple (37) entre le piston et la chambre, le piston (34) étant soumis mécaniquement à une pression d'une valeur déterminée, antagoniste à la pression exercée par le fluide contenu dans la chambre.

6. Dispositif selon la revendication 5, caractérisé en ce que les moyens de création d'une pression antagoniste à celle exercée sur le piston par le fluide sous pression, sont constitués par une rondelle ressort plate (39), bridée à sa périphérie (40) à l'intérieur de la tête de commande, et comportant une ouverture centrale pour le passage de l'axe (38), des moyens (42, 43, 44) solidaires de l'axe (38) étant prévus pour exercer, sur la rondelle ressort, une précontrainte en la déformant du côté opposé à celui duquel se trouve le piston.

**Claims**

1. Device for supplying fluid to hydraulic, pneumatic or hydropneumatic equipment (3), of the type comprising:

   (a) a body (7) inside which is provided a chamber (8a, 8b) into which open out an orifice (10) for admitting fluid under pressure, an outlet orifice (12) to the equipment (3) to be supplied and a drain orifice (13), the said chamber being subdivided into two parts (8a and 8b) by an annular seat (9) surrounding a passage (15) which connects the two parts (8a, 8b) of the chamber to each other; and
   (b) a slide valve in two coaxial parts (14a, 14b) able, depending on its position, to connect together either the orifice (10) admitting fluid under pressure and the outlet orifice (12), or the outlet orifice (12) and the drain orifice (13), the three orifices (10, 12, 13) never all being connected together, the two parts (14a, 14b) of the slide valve being offset axially in order to be able to bear against each other, the first part (14a) of the slide valve, being housed in a first part (8a) of the chamber, has an area with a cross section greater than that of the passage (15) surrounded by the annular seat (9) and is subject to the action of a spring (16) which tends to move it against the annular seat (9); and the second part (14b) of the slide valve, being housed in the second part (8b) of the chamber, has a cross section less than that of the passage (15) through which it can pass freely, the end (19) of the second part (14b) of the slide valve opposite to the end designed to come to bear against the first part (14a) of the slide valve being able to slide as a seal in the second part (8b) of the chamber defining a control chamber (20) connected to a control valve (26, 28, 30), the pressure in the said control chamber (20) tending to move the second part (14b) of the slide valve against the first part (14a) of the latter and tending to move the two parts (14a, 14b) of the slide valve simultaneously against the action of the spring (16); two of the said orifices (10, 12) opening out respectively into each of the two parts (8a, 8b) of the chamber and being situated on each side of the annular seat (9), the third orifice (13) being connected to a central cavity (17) provided in one (14b) of the said parts of the slide valve and opening out at the end designed to come to bear against the other (14a) part of the slide valve, characterised in that it comprises an annular component (9) forming the seat, disposed approximately half way along the chamber (8a, 8b) and projecting towards the inside of the latter, in that the control chamber (20) is permanently connected to a chamber (27) able to be connected by the said control valve (26, 28, 30) either to the orifice (10) admitting fluid under pressure or to a drain duct (32), in that the outlet orifice (12) opens out into the annular space surrounding the second part (14b) of the slide valve and situated close to the annular component (9) forming the seat, and in that the second part (14b) of the slide valve is subject to the action of the pressure prevailing in the said annular space which tends to separate it from the first part (14a) of the slide valve.

2. Device according to claim 1, characterised in that the orifice (10) connected to the source of fluid under pressure opens out into the area (8a) of the chamber containing the first part of the slide valve, whilst the two other orifices (12, 13) open out into two annular spaces provided in the area of the chamber containing the second part (14b) of the slide valve, the orifice (12) connected to the equipment being closer to the annular seat (9) than the orifice connected to the drain, and the second part (14b) of the slide valve, sliding as a seal in the part of the chamber between the two orifices (12, 13) connected respectively to the equipment and to the drain, consists of a tubular element open on the side facing the first part of the slide valve, communicating through an orifice (18) with the annular space connected to the drain, and closed at its end (19) opposite to the end oriented towards the first part (14a) of the slide valve, the closed end (19) of the second part of the slide valve defining one wall of a chamber (20) which can successively be supplied with control fluid and connected to the drain.

3.  Device according to claim 1, characterised in that the orifice (10) connected to the source of fluid under pressure opens out radially into the area (8a) of the chamber containing the first part (14a) of the slide valve which is formed by a tubular element, the orifice (13) connected to the drain opens out into an annular space provided in the area of the chamber (8a) containing the first part (14a) of the slide valve, and the orifice (12) connected to the equipment opens out into an annular space provided in the area (8b) of the chamber containing the second part (14b) of the slide valve, the end of the second part of the slide valve situated on the side opposite to the first part of the slide valve defining, in part, a chamber (20) which can successively be supplied with control fluid and connected to the drain.

4.  Device according to any one of claims 1 to 3, characterised in that the means for supplying with fluid under pressure the chamber (20) situated at the free end of the second part (14b) of the slide valve comprise two coaxial chambers (25, 27) with different cross sections, the first of which (25), permanently connected to a source of fluid under pressure, contains a ball (26) with a diameter greater than the diameter of the second chamber (27), with which is associated a spring (28) tending to move it in a direction for isolating the two chambers, the second chamber (27) being connected to the chamber (20) situated at the free end of the second part (14b) of the slide valve, and having pass through it, so as to form a seal, a hollow stem (30) connected to the drain and able to bear on the ball (26) in order to move it away from its seat.

5.  Device according to claim 4, characterised in that the means for actuating the stem (30) consist of a piston (34) which, having a shaft (38) pass through it which is integral with it, coaxial with the stem (30) and bearing on the latter, is mounted so as to slide without friction in a chamber, and defines, by means of its face situated on the stem side, a chamber (35) connected to a source of fluid under pressure, with the interposition of a flexible diaphragm (37) between the piston and the chamber, the piston (34) being subjected mechanically to a pressure of a given value, opposing the pressure exerted by the fluid contained in the chamber.

6.  Device according to claim 5, characterised in that the means for creating a pressure opposed to that exerted on the piston by the fluid under pressure consist of a flat spring washer (39), gripped at its periphery (40) inside the control head and having a central opening for the shaft (38) to pass through, means (42, 43, 44) attached to the shaft (38) being provided to exert, on the spring washer, a mechanical stress, deforming it on the side opposite to the one where the piston is situated.

**Patentansprüche**

1.  Fluidenversorgungseinrichtung einer hydraulischen, pneumatischen oder hydropneumatischen Anlage umfassend:
    a) einen Körper (7), in dessen Innerem eine Kammer (8a,8b) untergebracht ist, wobei diese Kammer mit einer Druckfluidenzufluß-Öffnung (10), einer zur Anlage (3) führenden Abflußöffnung (12) und einer Entleerungsöffnung (13) in Verbindung steht und wobei diese Kammer (8a,8b) in zwei Teilkammern (8a und 8b) unterteilt ist, nämlich durch einen Ringsitz (9), welcher einen die beiden Teilkammern (8a und 8b) miteinander verbindenden Durchgang (15) umschließt, und weiter umfassend
    b) einen in zwei koaxiale Teilschieber (14a,14b) unterteilten Schieber, wobei diese Teilschieber (14a,14b) je nach Position zur Herstellung einer Verbindung zwischen der Druckfluidenzufluß-Öffnung (10) und der Abflußöffnung (12) oder zur Herstellung einer Verbindung zwischen der Abflußöffnung (12 und der Entleerungsöffnung (13) angeordnet und ausgebildet sind, wobei weiter die drei Öffnungen (10,12,13) niemals in ihrer Gesamtheit in Verbindung miteinander stehen, wobei weiter die beiden Teilschieber (14a,14b) axial zueinander versetzt angeordnet sind derart, daß sie gegeneinander zur Anlage kommen können, wobei weiter der erste Teilschieber (14a) in einer ersten Teilkammer (8a) untergebracht ist, einen größeren Querschnitt besitzt als der von dem Ringsitz (9) umgebene Durchgang (15) und der Wirkung einer Feder (16) unterworfen ist, welche den ersten Teilschieber (14a) in Richtung auf den Ringsitz (9) vorspannt, wobei weiter der zweite Teilschieber (14b) in einer zweiten Teilkammer (8b) untergebracht ist und einen kleineren Querschnitt besitzt als der Durchgang (15), durch welchen er frei hindurchtreten kann, wobei weiter ein Ende (19) des zweiten Teilschiebers (14b), nämlich das von der Anlagestelle mit dem ersten Teilschieber (14a) abgelegene Ende dicht anliegend in der zweiten Teilkammer (8b) gleitend geführt ist und eine mit einem Pilot-Ventil (26,28,30) verbundene Steuerkammer (20) begrenzt, wobei weiter der Druck in dieser Steuerkammer (20) den zweiten Teilschieber (14b) in Richtung auf den ersten Teilschieber (14a) vorspannt und gleichzeitig die beiden Teilschieber (14a,14b) zusammen gegen die Wirkung der Feder (16) zu verschieben sucht, wobei weiter von zwei Öffnungen (10,12) aus der Gruppe der obengenannten Öffnungen, d.h. der Druckfluidenzufluß-Öffnung (10), der Abflußöffnung (12) und der Entleerungsöffnung (13) jeweils eine in jede der beiden Teilkammern (8a,8b) mündet und diese beiden Öffnungen zu beiden Seiten des Ringsitzes angeordnet sind, wobei weiter die dritte Öffnung (13) mit einer Zentralkavität (17) innerhalb eines (14b) der beiden Teilschieber verbunden ist und wobei diese Zentralkavität in dasjenige Ende dieses Teilschiebers ausmündet, das zur Anlage an dem anderen Teilschieber (14a) bestimmt ist,
dadurch gekennzeichnet,
daß die Fluidenversorgungseinrichtung ein den Ringsitz bildendes Ringelement (9) aufweist, welches annähernd in der Längsmitte der Kammer (8a,8b) angeordnet ist und in das Innere dieser Kammer hineinragt, daß die Steuerkammer (20) ständig mit einer Verbindungskammer (27) in Verbindung steht, welche Verbindungskammer (27) über das Pilot-Ventil (26,28,30) in Verbindung mit der Druckfluidenzufluß-Öffnung (10) oder mit einem Entleerungskanal (32) bringbar ist, daß die Abflußöffnung (12) in den den zweiten Teilschieber (14b) umschließenden Ringraum mündet und nahe dem sitzbildenden Ringelement (9) angeordnet ist und daß der zweite Teilschieber (14b) dem Druck in diesem Ringraum ausgesetzt ist, der ihn in Richtung von dem ersten Teilschieber (14a) weg beaufschlagt.

2. Fluidenversorgungseinrichtung nach Anspruch 1,
dadurch gekennzeichnet,
daß die Druckfluidenzufluß-Öffnung (10) in einen Bereich (8a) der Kammer (8) mündet, welche den zweiten Teilschieber aufnimmt, während die beiden anderen Öffnungen (12,13) in zwei Ringräume münden, die in einem den zweiten Teilschieber (14b) enthaltenden Bereich der Kammer angeordnet sind, wobei die Abflußöffnung (12) näher bei dem Ringsitz (9) liegt als die Entleerungsöffnung (13), und daß der zweite Teilschieber (14b) abdichtend in dem zwischen den beiden anderen Öffnungen (12,13), d. h. zwischen der Abflußöffnung (12) und der Entleerungsöffnung (13), gelegenen Teil der Kammer geführt ist, gebildet ist von einem zu dem ersten Teilschieber hin offenen Rohrelement (14b), welches über eine Öffnung (18) mit dem an die Entleerungsöffnung (13) angeschlossenen Ringraum in Verbindung steht und an seinem von dem ersten Teilschieber (14a) abgelegenen Ende geschlossen ist, wobei das geschlossene Ende (19) des zweiten Teilschiebers (14b) eine Begrenzungswand der Steuerkammer (20) bildet, die sukzessive mit einem Steuerfluid beaufschlagbar und mit einem Entleerungsraum verbindbar ist.

3. Fluidenversorgungseinrichtung nach Anspruch 1,
dadurch gekennzeichnet,
daß die Druckfluidenzufluß-Öffnung (10) radial in einen den ersten Teilschieber (14a) enthaltenden Bereich (8a) der Kammer mündet, wobei dieser erste Teilschieber (14a) von einem Rohrelement (14a) gebildet ist, daß die Entleerungsöffnung (13) in einen Ringraum mündet, welcher in einem den zweiten Teilschieber enthaltenden Bereich (8a) der Kammer ausgebildet ist, und daß die Abflußöffnung (12) an einen Ringraum angeschlossen ist, welcher in einem den zweiten Teilschiebers (14b) aufnehmenden Bereich (8b) der Kammer ausgebildet ist, wobei das von dem ersten Teilschieber abgelegene Ende des zweiten Teilschiebers eine Steuerkammer (20) teilweise begrenzt, die nacheinander mit einem Steuerfluid beschickt und mit einem Entleerungsraum verbunden werden kann.

4. Fluidenversorgungseinrichtung nach einem der Ansprüche 1 - 3,
dadurch gekennzeichnet,

daß eine Einrichtung zur Druckfluidenversorgung der am freien Ende des zweiten Teilschiebers (14b) gelegenen Steuerkammer (20) zwei koaxiale querschnittsverschiedene Kammern (25,27) umfaßt, deren erste (25) ständig mit einer Druckfluiden-Lieferstelle verbunden ist und eine gegenüber dem Durchmesser der zweiten Kammer (Verbindungskammer 27) größeren Durchmesser besitzt, wobei dieser Kugel eine Feder (28) zugeordnet ist, welche die Feder im Sinne einer Trennung der beiden Kammern vorspannt und wobei die zweite Kammer (27) mit der am freien Ende des zweiten Teilschiebers (14b) angeordneten Steuerkammer (20) verbunden ist und wobei schließlich die zweite Kammer (27) von einem Hohlstift (30) mit Dichtwirkung durchsetzt ist, welcher an einen Entleerungsraum angeschlossen ist und gegen die Kugel (26) anlegbar ist, um letztere von einem zugehörigen Ventilsitz abzuheben.

5. Fluidenversorgungseinrichtung nach Anspruch 4,
dadurch gekennzeichnet,
daß zur Betätigung des Hohlstifts (30) eine Kolbeneinrichtung (34) vorgesehen ist mit einem Kolben (34), der von einem Schaft (38) durchsetzt und mit diesem verbunden ist, wobei dieser Schaft koaxial zu dem Hohlstift (30) ist und gegen den Hohlstift anlegbar ist, wobei weiter der Kolben (34) im wesentlichen reibungslos gleitend in einer Führungskammer geführt ist und mit seiner hohlstiftnahen Seitenfläche eine an eine Druckfluiden-Lieferstelle angeschlossene Kammer (35) begrenzt, wobei weiter eine flexible Membrane (37) zwischen dem Kolben (34) und dieser Kammer (35) angeordnet ist und wobei der Kolben (34) einer mechanischen Krafteinwirkung vorbestimmter Größe unterworfen ist, welche Krafteinwirkung dem auf den Kolben (34) ebenfalls einwirkenden Druck in der membranbegrenzten Kammer (35) entgegenwirkt.

6. Fluidenversorgungseinrichtung nach Anspruch 5,
dadurch gekennzeichnet,
daß zur Erzeugung der entgegenwirkenden Kraft eine Rundfederscheibe (39) vorgesehen ist, daß diese Rundfederscheibe (39) an ihrem Außenumfangsrand (40) im Innern eines der Kolbeneinrichtung zugehörigen Steuerkopfes eingespannt ist und daß diese Rundfederscheibe (39) eine Zentralöffnung für den Durchgang des Schafts (38) besitzt, wobei dem Schaft (38) Vorspannungseinstellmittel (42,43,44) zugeordnet sind, um der Rundfederscheibe eine Vorspannung zu erteilen, durch welche diese von dem Kolben (34) weg verformbar ist.

# FIG.1

# FIG.8

# FIG.2

# FIG.3

# FIG.4

# FIG.5

# FIG.6

# FIG.7